# EUROPEAN PATENT SPECIFICATION

(11) **EP 2 240 657 B1**
(45) Date of publication and mention of the grant of the patent: **10.08.2011**
(21) Application number: 08869241.3
(22) Date of filing: 30.12.2008
(51) Int. Cl.: E04H 12/30, E04F 11/035, E03B 11/12

(54) **METHOD FOR PROVIDING A WATER TOWER, AND WATER TOWER**
VERFAHREN ZUR BEREITSTELLUNG EINES WASSERTURMS UND WASSERTURM
PROCÉDÉ DE CONSTRUCTION D'UN CHÂTEAU D'EAU ET CHÂTEAU D'EAU AINSI OBTENU

(30) Priority: 31.12.2007 IT BO20070855
(43) Date of publication of application: 20.10.2010
(73) Proprietor: SO.L.E.S. Societa' Lavori Edili e Serbatoi S.p.A., 47100 Forli' (IT)
(72) Inventor: ZAGO, Roberto, I-38068 Rovereto (IT); ZAMBIANCHI, Lamberto, I-47010 Villafranca (IT)
(74) Representative: Maccagnan, Matteo
(86) International application number: PCT/IB2008/003655
(87) International publication number: WO 2009/087470

(56) References cited:
- CH-A- 478 317
- DE-A1- 2 240 026
- DE-A1- 4 232 800
- DE-C- 23 187
- FR-A- 2 239 134
- FR-A1- 2 801 621
- FR-A5- 2 038 452
- US-A- 4 056 256
- US-A- 4 403 460
- US-A- 5 241 797

## Description

### TECHNICAL SECTOR

The present invention relates to a method for providing a water tower.

### PRIOR ART

The present invention relates to a method for building water towers made of reinforced concrete. As is known, water towers generally comprise a reservoir normally shaped like a truncated cone with its minor base facing downwards and connected to the top end of a stem or supporting column, which rises vertically upwards from a foundation sl1ab or bed resting on the ground.

The water towers described above are generally built in a traditional way by providing in the first place the bed and the stem, and providing the reinforcement for the reservoir on top of the stem, and then building it. Even though the traditional method of construction of water towers described above has been used for a long time for building water towers, it presents numerous drawbacks, the most important of which is beyond doubt represented by the fact of having to reinforce and make a reservoir, which may be even of considerable dimensions, at a relatively great height and such as to render lifting of the materials necessary for construction problematical and render the working conditions hazardous for the workers.

FR2239134 discloses a method for construction of a water tower made of reinforced concrete according to the preamble of independent claim 1.

### DESCRIPTION OF THE INVENTION

The aim of the present invention is to provide a method for building a water tower that will be simple and inexpensive to produce and will constitute an improvement over the known art.

Provided in accordance with the present invention are a method for building a water tower according to what is set forth in the annexed claims.

### BRIEF DESCRIPTION OF THE DRAWINGS

The present invention will now be described with reference to the annexed drawings, which illustrate some non-limiting examples of embodiment thereof, wherein:
- Figure 1 is a view in side elevation of a water tower provided according to the method of the present invention;
- Figure 2 illustrates in axial cross section some details of the water tower of Figure 1 in a first step of lifting of a stem of the water tower itself;
- Figures 3 to 7 illustrate, in axial cross section, the details of Figure 2 in some successive steps of lifting of the stem;
- Figure 8 is a cross section according to the line VIII-VIII of Figure 7;
- Figure 9 is a view at an enlarged scale of a detail of Figure 6;
- Figure 10 is a cross section according to the line X-X of Figure 9;
- Figure 11 is a view of a different embodiment of the detail of Figure 9;
- Figure 12 is an axial cross section at an enlarged scale of a reservoir for the water tower of Figure 1;
- Figure 13 is a cross section according to the line XIII-XIII of Figure 12;
- Figure 14 is a cross section at an enlarged scale of a stem of the water tower of Figure 1;
- Figure 15 is a cross section according to the line XV-XV of Figure 14;
- Figure 16 is a perspective view at an enlarged scale of a prefabricated step of a spiral staircase of Figure 14;
- Figure 17 is a schematic view of a variant of Figure 8 where three sets of hydraulic jacks are highlighted; and
- Figure 18 is a schematic view, with parts removed for reasons of clarity and partially in cross section, of a hydraulic jack used for lifting the stem of the water tower. The staircase shown in figures 14-16 does not per se form part of the present invention

### PREFERRED EMBODIMENTS OF THE INVENTION

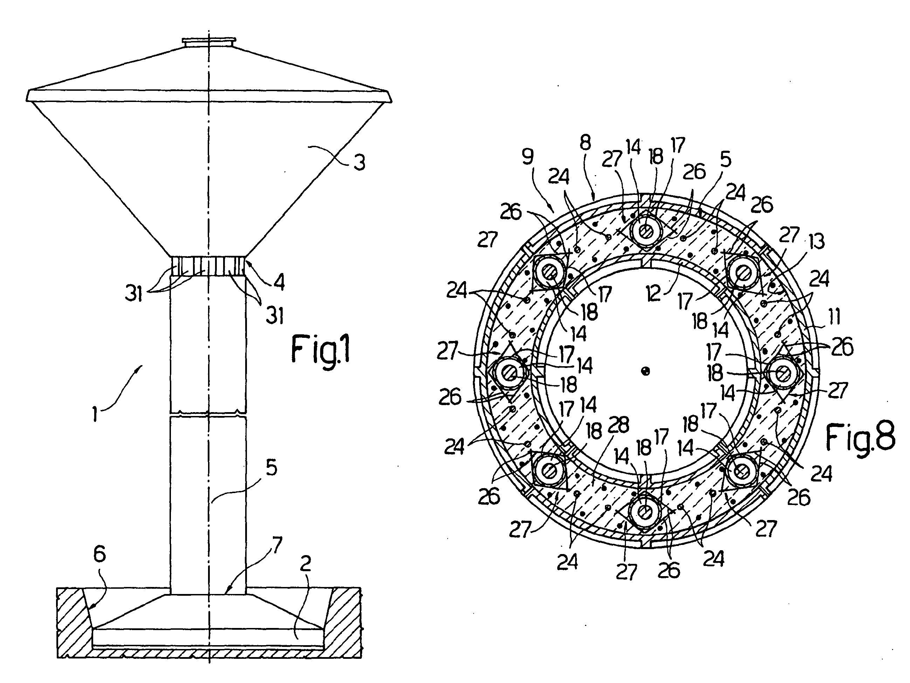

In Figure 1, designated as a whole by the reference number 1 is a water tower made of reinforced concrete, comprising a bottom bed 2, a top reservoir 3 shaped substantially like a truncated cone and set with a smaller base 4 facing downwards, and a stem or column 5 set between the bed 2 and the smaller base 4 of the reservoir 3.

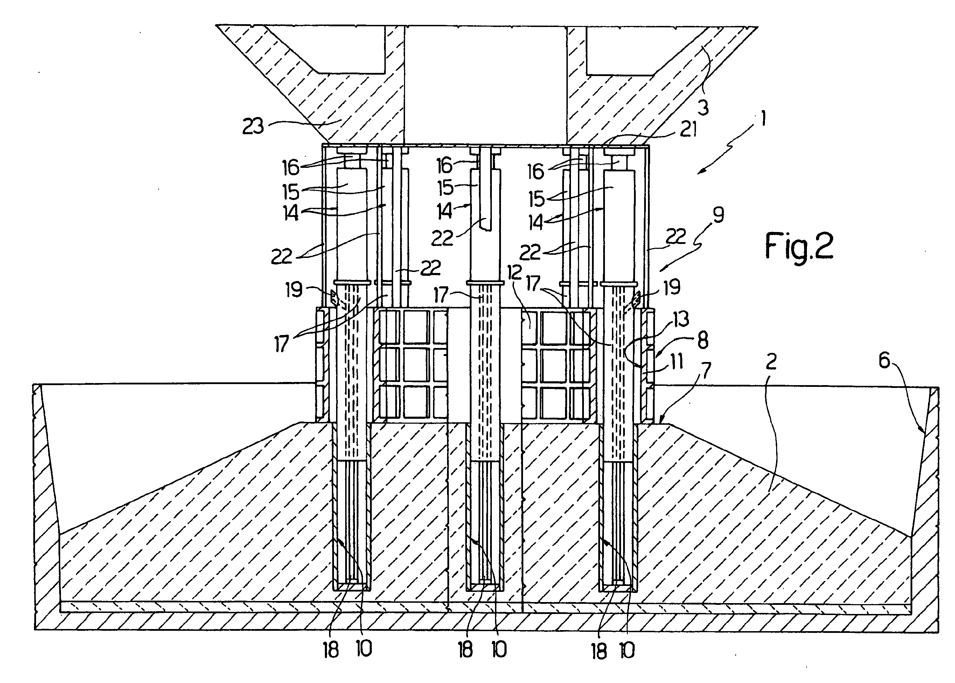

According to what is illustrated in Figure 2, the water tower 1 is built starting from the laying of the reinforced-concrete bed 2 inside a trench 6. The bed 2 is generally shaped like a truncated cone with a major base facing downwards and with a smaller base or top surface 7 functioning as resting surface for a dismantleable reinforcement 8 of a mobile formwork designated as a whole by 9 and designed to enable forming of the stem 5.

The reinforcement 8 is set on top of a plurality of vertical tubular ducts 10 closed at the bottom and made through part of the bed 2.

The reinforcement 8 comprises an outer wall 11 and an inner wall 12, which can be taken down and are coaxial to one another, are arranged with their axis set vertical, and rest with their bottom base on the top surface 7 of the bed 2. Extending through an annular space 13 comprised between the walls 11 and 12 are hydraulic jacks 14 uniformly distributed about the annular reinforcement 8 and each coaxial to a respective duct 10.

Each jack 14 comprises a central cylinder 15, extending from the top end of which is a mobile rod 16, and extending from the bottom end of which is a tubular foot 17 open at the bottom, the external diameter of which is substantially equal to the internal diameter of the tubular ducts 10. Extending moreover from the bottom end of the central cylinder 15 is a fixed resting rod 18, set co-axial with respect to the corresponding tubular foot 17 and projecting therefrom with a free end of its own. Each fixed resting rod 18 has in cross section a substantially cross shape, and the corresponding tubular foot 17 has, in the proximity of its own top end, a supply duct 19, which is designed to set in communication with the outside the space comprised between the inner surface of the tubular foot 17 itself and the outer surface of the corresponding fixed resting rod 18.

The hydraulic jacks 14 are each mounted in an initial vertical position with the central cylinder 15 immediately above the top end of the reinforcement 8, with the tubular foot 17 set through the annular space 11 and partially engaged so that it can slide inside the corresponding tubular duct 10, and with the bottom end of the fixed resting rod 18 in contact with the bottom of the tubular duct 10 itself.

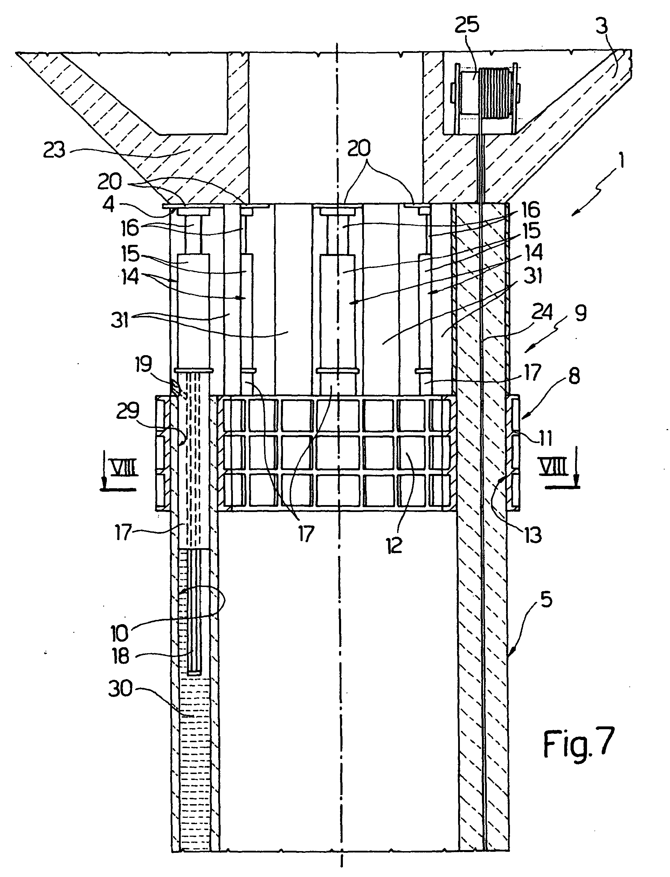

In the aforesaid initial position, the mobile rod 16 of each hydraulic jack 14 is set in a retracted position and is connected, at its own free end, to a respective segment 20 (Figure 7) of a removable annular beam 21 set in a substantially horizontal plane above the reinforcement 8 and co-axial with respect to the reinforcement 8 itself.

The annular beam 21 is rendered fixed with respect to the reinforcement 8 via a plurality of tie bars 22, the length of which is substantially equal to that of the hydraulic jacks 14 without the tubular foot 17 and the fixed resting rod 18 and which are set with the mobile rods 16 in a retracted position.

The annular beam 21 is fixed with respect to the reservoir 3 and constitutes a bottom structure for a formwork (not illustrated) for forming of the reservoir 3, which is cast and completed substantially on the ground directly above the annular beam 21 set in the position illustrated in Figure 2.

Once the reservoir 3 has been completed, the aforesaid formwork (not illustrated) is taken down, and through the holes pre-formed in a bottom wall 23 of the reservoir 3 are passed pre-compression cables 24 (Figure 7) wound on drums 25 set inside the reservoir 3 and engaged at the bottom to the bed 2.

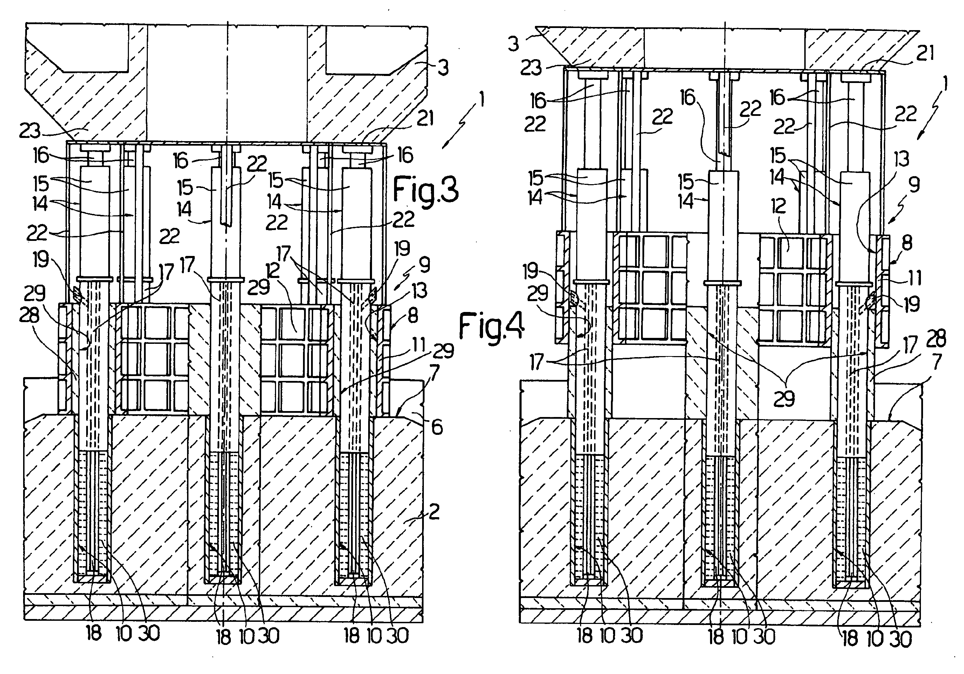

According to what is illustrated in Figure 3, construction of the stem 5 is started by inserting inside the annular space 13 reinforcement rods 26 (Figure 8) in order to provide, around each tubular foot 17, a substantially tubular reticular reinforcement 27. Next, concrete is cast in the annular space 13 so as to englobe the reinforcements 27 and to form a first segment 28 of the stem 5. Once consolidated, the segment 28 is fixedly anchored to the bed 2 and is traversed by a plurality of vertical ducts 29, which are each defined by the corresponding tubular foot 17 and communicate with the corresponding tubular ducts 10.

Gradually inserted through further vertical holes are round metal rods, which constitute a vertical reinforcement of the stem 5.

At this point or, alternatively, at start of operations before forming of the segment 28, sand 30 is fed in through each supply duct 19 so as to completely fill the entire part of each tubular duct 10 left free by the corresponding tubular foot 17.

Once the sand 30 has been fed in, all the hydraulic jacks 14 are operated simultaneously, according to what is illustrated in Figure 4 so as to bring the mobile rods 16 into their extracted position and lift the reservoir 3 and, via the tie bars 22, the reinforcement 8, for a stretch less than the height of the reinforcement 8 itself, in order to prevent the reinforcement 8 from sliding out of the segment 28 that functions as slide guide for the reinforcement 8.

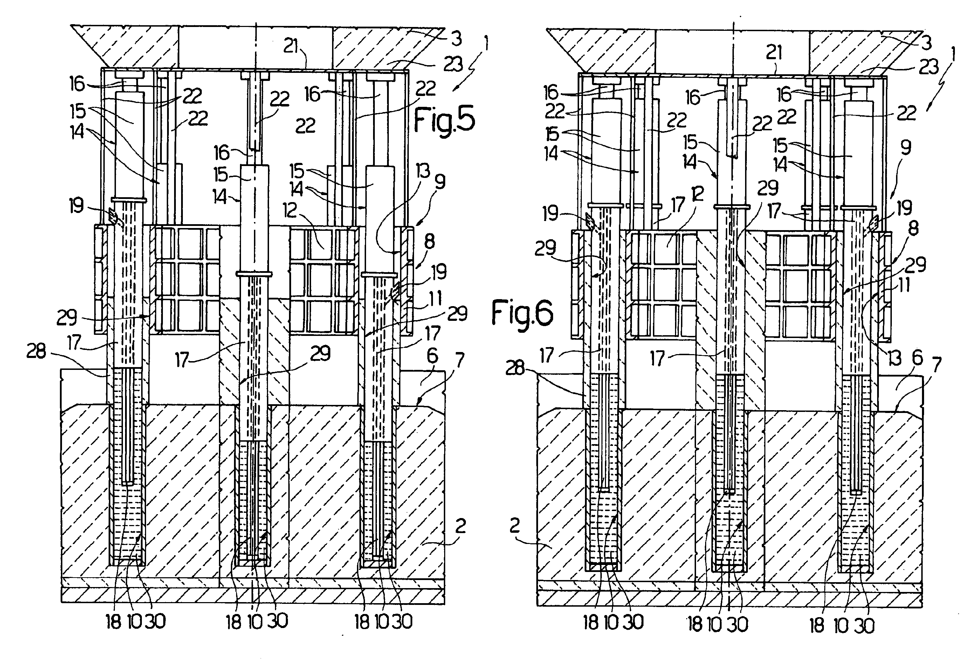

Next, according to what is illustrated in Figure 5, the mobile rod 16 of a first hydraulic jack 14 is brought back into the retracted position, thus bringing about advance of the corresponding central cylinder 15, of the corresponding tubular foot 17, and of the corresponding fixed resting rod 18. Inside the space created along the duct 29, by lifting of the tubular foot 17, there is then fed in further sand 30, which is compacted via the fixed resting rod 18 by setting the hydraulic jack 14 in question in action again by feeding inside it hydraulic fluid at a pressure at least equal to the weight of the reservoir 3 divided by the number of the hydraulic jacks 14 used, and such as to determine safe resting of the fixed resting rod 18 on the compacted sand 30, but as not to bring about lifting of the reservoir 3 itself.

The operation of advance described above is repeated in succession for all the hydraulic jacks 14 until the configuration illustrated in Figure 6 is reached, in which the weight of the reservoir 3 is perfectly balanced by the hydraulic jacks 14, each of which rests upon a respective column of compacted sand 30 and is set with its mobile rod 16 in the retracted position.

Inside the empty space created, between the walls 11 and 12, by lifting of the reinforcement 8, the tubular reinforcements 27 are prolonged, and new concrete is then cast, which, by consolidating, determines prolongation of the initial segment 28 by a stretch equal to the lifting of the reinforcement 8.

The cycle of operations described previously starting from the configuration of Figure 3 is then repeated a given number of times until completion, in successive segments, of construction of the stem 5 and until the configuration illustrated in Figure 7 is reached, where the reservoir has reached the desired height and the hydraulic jacks 14 are arranged with their mobile rods 16 in an almost completely retracted position.

At this point, the segments of the annular beam 21 not loaded by the hydraulic jacks 14 are taken down, and supporting columns 31 are set between the top of the stem 5 and the bottom wall 23 of the reservoir 3. After fixing of the supporting columns 31 in position in any known way, the formwork 9 can finally be dismantled. At this point, construction of the water tower 1 is completed.

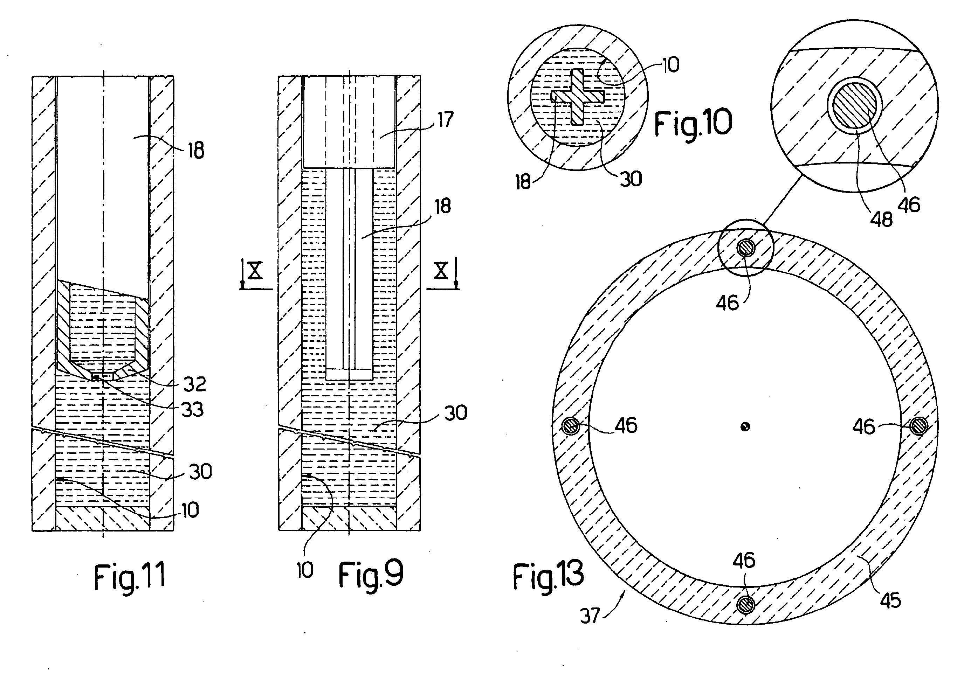

As has been said previously and illustrated in greater detail in Figures 9 and 10, each jack 14 comprises a fixed resting rod 18 set co-axial to the corresponding tubular foot 17 and projecting therefrom with a free end thereof. Each fixed resting rod 18 presents in cross section a substantially cross-like shape.

According to a different embodiment illustrated in Figure 11, in each hydraulic jack 14 the fixed resting rod 18 is replaced by a tubular element 18, which is fixed at the top with respect to the respective tubular foot 17 and concentric thereto (just as the resting rod 18) and is provided at the bottom with a closing plate 32 having a central through hole 33 for enabling off-flow of the sand 30 downwards. The external diameter of the tubular element 18 is approximately 15-30 mm narrower than the internal diameter of the corresponding tubular duct 10 in such a way as to enable a convenient longitudinal sliding of the tubular element 18 inside the tubular duct 10 without at the same time enabling significant transverse movements of the tubular element 18 with respect to the tubular duct 10. In other words, each tubular element 18 is concentric to the respective tubular foot 17, is fixed at the top to the tubular foot 17, and is slightly narrower than the tubular foot 17 itself.

Preferably, each closing plate 32 is hourglass-shaped and has a single central through hole 33 in order to favour off-flow of the sand 30 downwards and hinder backflow of the sand 30 upwards. In the embodiment illustrated in Figure 11, the closing plate 32 is hourglass-shaped and has an inclination downwards (i.e., the central through hole 33 is set in a position corresponding to the lower area of the closing plate 32). According to a different embodiment (not illustrated), the closing plate 32 is hourglass-shaped and has an inclination upwards (i.e., the central through hole 33 is set in a position corresponding to the highest area of the closing plate 32). In other words, the closing plate 32 could be turned through 180° with respect to what is illustrated in Figure 11. The vertical extension of the tubular elements 18 illustrated in the embodiment of Figure 11 is approximately equal to the vertical extension of the resting rods 18 illustrated in the embodiment of Figures 9 and 10.

Using the embodiment described in Figure 11, as compared to the embodiment illustrated in Figure 9 the load is transferred into a lower area and hence involves older segments 28 of the stem 5, in which the concrete has had a longer time to cure and which hence present a higher mechanical resistance. Consequently, it is possible to increase the average rate of lifting of the reservoir 3, i.e., it is possible to reduce the times for construction of the water tower 1.

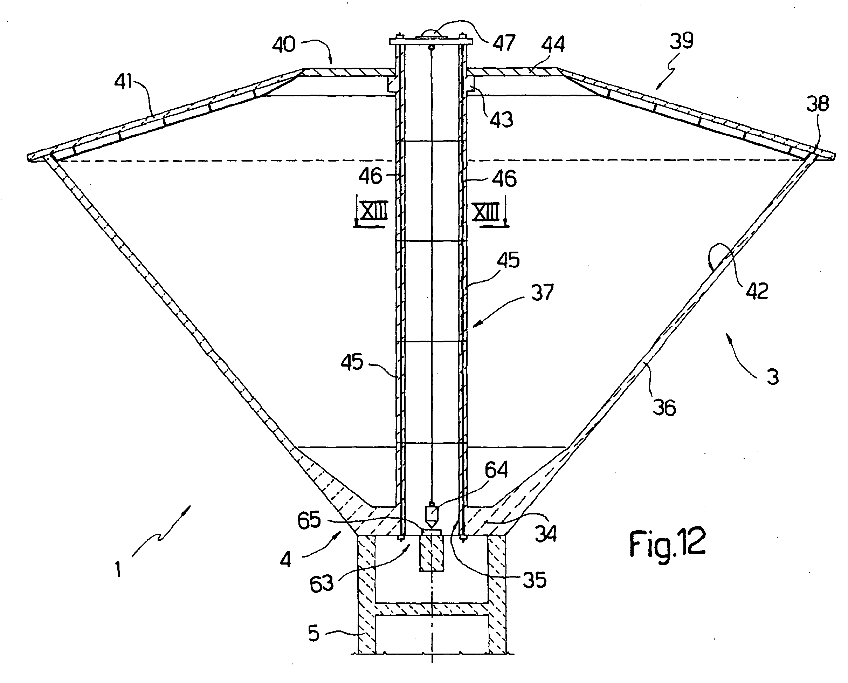

According to what is illustrated in Figure 12, the reservoir 3 comprises a circular plane bottom wall 34 connected to the top of the stem 5 and having a central hole 35. The reservoir 3 further comprises a side wall 36 made of reinforced concrete substantially shaped like a truncated cone tapered downwards and extending upwards from the periphery of the wall 34. Finally, the reservoir 3 comprises a central pipe 37, which is co-axial to the stem 5, extends upwards from the portion of the wall 34 surrounding the central hole 35 and projects above a free top edge 38 of the side wall 36 defined by a horizontal annular surface.

The reservoir 3 is provided with a covering, which is designated as a whole by the number 39 and comprises a horizontal plane central slab 40 of a circular shape, supported by the central pipe 37 and co-axial thereto, and a peripheral slab 41 substantially shaped like a truncated cone tapered upwards, the internal periphery of which engages the external periphery of the slab 40, and the external periphery of which rests on the top edge 38 of the side wall 36 and engages an internal surface 42 shaped like a truncated cone of the side wall 36 itself.

The central pipe 37 has, in the proximity of its own top end, an outer annular flange 43, and the slab 40 is constituted by a beam 44 made of reinforced concrete and having an annular shape set around the central pipe 37. The beam 44 rests with its own internal periphery on the flange 43 and is limited on the outside by a surface shaped like a truncated cone.

The central pipe 37 is formed by joining a plurality of tubular segments 45 stacked on top of one another. Spread between two successive segments 45 is cementitious material or, alternatively, resins for ensuring continuity of the material and hence impermeabilization in an area corresponding to the join. In addition, the segments 45 that constitute the central pipe 37 are packed together by means of four pre-compression tie bars 47, which extend from the wall 34 to a plate 47 for top closing of the central pipe 37. According to what is illustrated in Figure 13, each tie bar 47 is constituted by a metal strand set inside a vertical through hole 48 made through a side wall of the segments 45 that constitute the central pipe 37.

The function of the central pipe 37 is to enable inspection of the reservoir 3 when the reservoir 3 itself is full of water. For this purpose, the central pipe 37 is provided inside with a ladder (not illustrated), which originates at the smaller base 4 of the reservoir 3 and terminates in a position corresponding to a top inspection opening (not illustrated) made through the side wall of the central pipe 37.

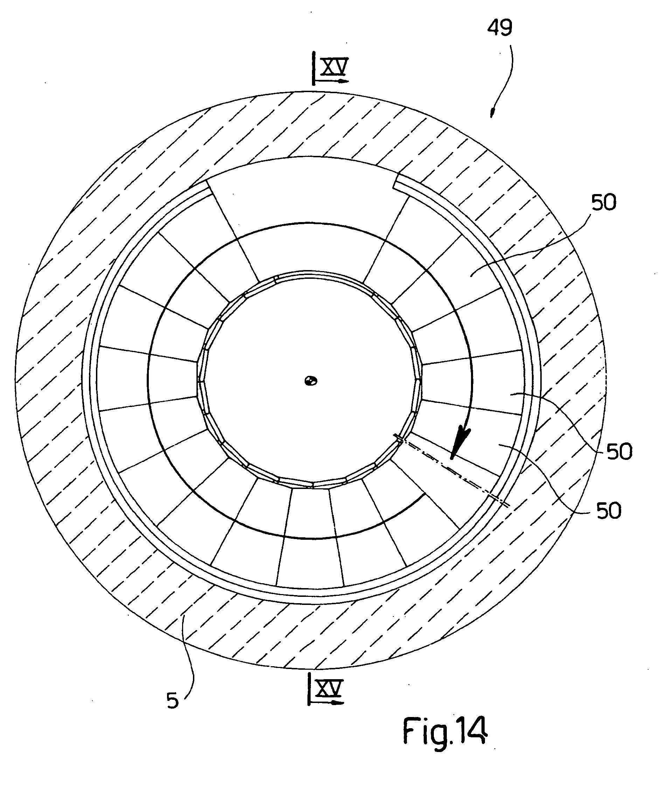

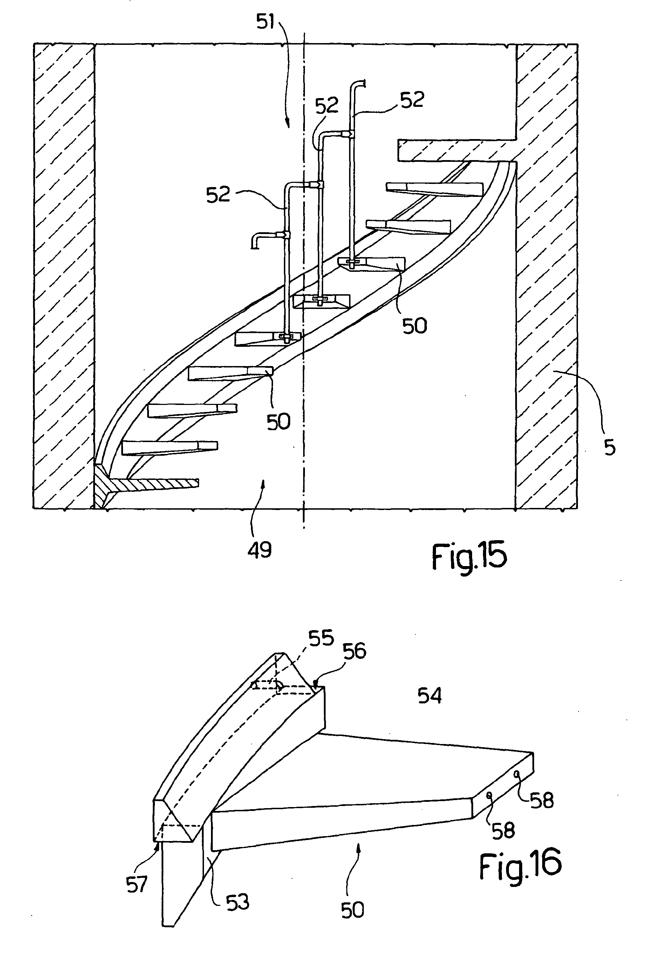

According to what is illustrated in Figures 14 and 15, in order to enable reaching of the smaller base 4 of the reservoir 3 (and hence continue ascent through the central pipe 37) the stem 5 is provided on the inside with a spiral staircase 49 constituted by a succession of steps 50, which are fixed in cantilever fashion to a side wall of the stem 5 and are set on top of one another at progressively increasing heights. The spiral staircase 49 is preferably provided with a metal handrail 51 comprising a succession of L-shaped metal pipes 52, each of which has a bottom end fixed to a respective step 50 and a top end fixed to the metal pipe 52 of the next step 50.

According to what is illustrated in Figure 16, each step 50 is constituted by a block of reinforced concrete comprising a vertical base 53, which is fixed by means of bolts to a side wall of the stem 5 and a horizontal element 54, which extends in cantilever fashion from the vertical base 53.

The vertical base 53 is provided on one side with a through hole 55, inserted through which is a fixing bolt (not illustrated), which is screwed through a blind hole made in the side wall of the stem 5. In addition, the vertical base 53 is shaped in such a way as to present, in a position corresponding to the through hole 55, a resting surface 56 for the vertical base 53 of the next step 50 and so as to present, on the opposite side of the through hole 55, an appendage 57 set in cantilever fashion and designed to rest on the resting surface 56 of the previous step 50. In other words, each step 50 rests on one side on the previous step 50 and, on the opposite side, provides a support for the next step 50. The first step 50 rests on the bottom bed 2 of the water tower 1, whereas the last step 50 does not provide any support for any step 50.

Preferably, the horizontal element 54 of each step has, both in plan view and in vertical section, the shape of a truncated cone and terminates with a vertical wall having a pair of blind threaded holes 58, screwed in which are bolts for fixing the respective metal pipe 52 of the handrail 51.

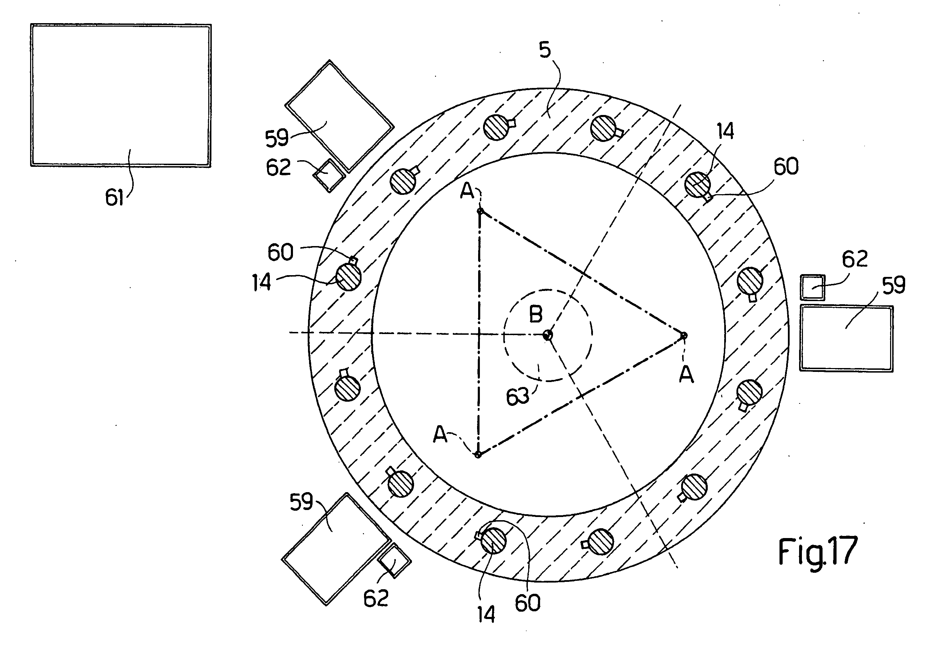

According to a preferred embodiment illustrated in Figure 17, the hydraulic jacks 14 are divided into three operating sets (represented with a dashed line in Figure 17 and designated by the roman numerals I, II and III), which are equivalent to one another, symmetrical, and independent. The three operating sets are equivalent to one another, i.e., they each comprise one and the same number of hydraulic jacks 14, and are symmetrical with respect to one another, i.e., the centroids A of thrust of the three operating sets correspond to the vertices of an equilateral triangle centred on the centroid B of the weight of the reservoir 3. Said requisites of equivalence and symmetry of the three operating sets can be easily respected in so far as the water tower 1 is an intrinsically symmetrical and balanced structure given that it presents a perfect cylindrical symmetry about a longitudinal axis of its own set centrally.

The hydraulic jacks 14 of each operating set are connected to a respective flowrate-controlled proportional solenoid valve 59, which can be controlled to adjust the flowrate of pressurized oil that is fed to the jacks 14 of the operating set. According to a possible embodiment, provided downstream of the proportional solenoid valve 59 are shut-off solenoid valves (not illustrated), each of which supplies the pressurized oil to a respective hydraulic jack 14 and can be closed to interrupt supply of the pressurized oil to the hydraulic jack 14 itself.

It should be emphasized that the proportional solenoid valve 59 of one operating set is independent of the proportional solenoid valves 59 of the other two operating sets. In addition, to each hydraulic jack 14 there can be coupled a respective linear position sensor 60 (typically a linear encoder), which measures the position of the rod 16 with respect to the cylinder 15 so as to be able to measure in real time the effective expansion of the hydraulic jack 14 itself. During lifting, the system is constantly monitored by a control unit 61, which is connected to pressure sensors 62 for measuring the effective pressure in the proportional solenoid valves 59, is connected to the position sensors 60 (if present) for measuring the effective extension of each hydraulic jack 14, and is connected to an inclination sensor 63 (illustrated in detail in Figure 12), which measures in real time the inclination of the reservoir 3 with respect to the vertical. In certain particular situations, the control unit 61 could also be connected to a series of strain gauges with large bases applied to the reservoir 3 for measuring the stresses induced on the reservoir 3 itself by lifting.

According to what is illustrated in Figure 12, the inclination sensor 63 comprises a plumb-line 64 suspended inside the central pipe 37 of the reservoir 3 and a reader 65 (for example, a telecamera or a magnetic proximity sensor), which reads the position of the free end of the plumb-line 64. Said mode of implementation of the inclination sensor 63 presents the dual advantage of being economically advantageous to produce and offering a high precision of measurement. As an alternative or in addition (in order to have redundant measurements) to the inclination sensor 63 illustrated in Figure 12, it is possible to use commercially available inclinometers, which are fixed (screwed or glued) to a wall of the reservoir 3 or of the central pipe 37.

Upon lifting of the reservoir 3 described previously, by means of the respective proportional solenoid valve 59, the hydraulic circuits of the hydraulic jacks 14 of each operating set are connected in parallel to an oil pump (not illustrated). Lifting of the reservoir 3 is performed by expanding the hydraulic jacks 14 of all three the operating sets together. During lifting of the reservoir 3, the control unit 61 determines the effective value of inclination of the reservoir 3 with respect to the vertical by means of the inclination sensor 63 and governs the proportional solenoid valves 59 in feedback control in order to maintain the effective value of the inclination of the reservoir 3 with respect to the vertical equal to a desired pre-set value (typically the ideal condition of perfect verticality) and in any case not above a maximum pre-set value (for obvious reasons of safety and stability of the structure). In other words, a desired value (typically the ideal condition of perfect verticality) of the inclination of the reservoir 3 with respect to the vertical is established beforehand, and, during lifting, the effective value of the inclination of the reservoir 3 with respect to the vertical measured by the inclination sensor 63 is used as feedback variable by the control unit 61 for adjusting opening of the proportional solenoid valves 59 of the three operating sets. Typically, the error signal of the inclination of the reservoir 3 with respect to the vertical (i.e., the difference between the desired value and the effective value of the inclination of the reservoir 3 with respect to the vertical) is processed by one or more PID regulators to determine a signal for driving the proportional solenoid valves 59. For example, if during lifting the reservoir 3 leans towards one operating set, then the control unit 61 will increase the flow of oil to this operating set and simultaneously will decrease the flow of oil to the other two operating sets. It is clear that, if the effective value of the inclination of the reservoir 3 with respect to the vertical exceeds the maximum value, then lifting is immediately interrupted to determine and eliminate the cause of said excessive inclination.

Thanks to the feedback control described above, it is possible to ensure that during lifting the reservoir 3 will maintain a correct inclination with respect to the vertical and it is hence possible to carry out lifting at an average rate higher than the average rate used up to the present day. In any case, lifting of the reservoir 3 is normally carried out at a low average rate so as to be always in static conditions. The low operating rate guarantees a high margin of safety in the lifting operation in so far as, if the dynamic actions are totally eliminated, it is possible to refer to the standards for static conditions. In addition, lifting can be stopped at any instant for enabling monitoring, calibrations, or modifications on the electrical control system or on the hydraulic system.

The function of the pressure sensors 62 and of the position sensors 60 is to monitor the situation of the system in order to check whether, as a whole, the system is balanced (as may be expected in view of the high degree of symmetry of the system itself) or presents any imbalance that is potentially an index of malfunctioning or the like. In other words, given that the system has an extremely high degree of symmetry, the pressure of the oil would have to be the same in all three proportional solenoid valves 59, and the expansion would have to be the same for all the hydraulic jacks 14. If this does not occur, it is possible that there is malfunctioning, which it is advisable to investigate.

According to a different embodiment, lifting of the reservoir 3 is performed by expanding together the hydraulic jacks 14 of just one operating set at a time, whilst the hydraulic jacks 14 of the other two operating sets are kept in a state of pause. In other words, lifting of the reservoir 3 envisages simultaneous expansion of the hydraulic jacks 14 of just one operating set at a time so as to enable at each step a lifting by 1-3 cm. This procedure produces minor rotations of the reservoir 3 with respect to the horizontal plane, and said rotations are enabled on account of the effect of compensation provided by the overall elasticity of the system.

It should be considered that the reservoir 3 from the static standpoint is resting on three points (the centroids A of thrust) provided with a spherical hinge. For this reason, it is possible to carry out lifting by activating one operating set at a time, and the entire reservoir 3 will rotate about the axis passing through the centroids A of thrust of the other two operating sets in pause conditions, without any onset of states of constraint of a statically indeterminate nature.

Generally, the reservoir 3 undergoes, at each lifting step, an inclination with respect to the vertical of fractions of a degree; the component along said inclined plane of the weight of the reservoir 3 is very modest and hence negligible.

According to a further embodiment, the hydraulic jacks 14 are not divided into the three operating sets described above, but form a single operating set. In other words, the hydraulic circuits of all the hydraulic jacks 14 are connected through one and the same proportional solenoid valve 59 to an oil pump. In this embodiment, all the hydraulic jacks 14 expand together.

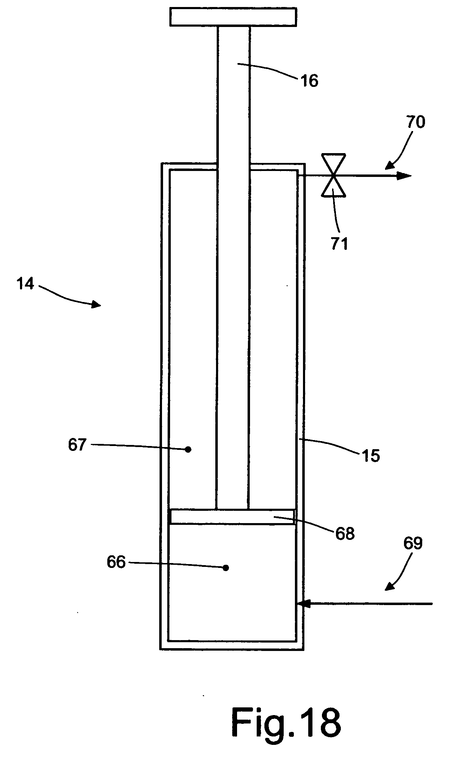

According to what is illustrated in Figure 18, each hydraulic jack 14 is a double-acting hydraulic jack and comprises a bottom chamber 66 and a top chamber 67, which are designed to be filled with pressurized oil, are provided with respective pistons 68 connected to the mobile rod 16, and are alternatively filled and emptied to displace the mobile rod 16 in two opposite directions. In the embodiment illustrated in Figure 18, a single common piston 68 is provided for both of the chambers 66 and 67, i.e., a single body that performs the function of piston for both of the chambers 66 and 67.

In particular, in order to expand a hydraulic jack 14 the bottom chamber 66 is filled through an inlet/outlet opening 69, and simultaneously the top chamber 67 is emptied through an inlet/outlet opening 70. In order to retract a hydraulic jack 14, the bottom chamber 66 is emptied through the inlet/outlet opening 69, and simultaneously the top chamber 67 is filled through the inlet/outlet opening 70.

Set in a position corresponding to the inlet/outlet opening 70 of each hydraulic jack 14 is a proportional valve 71, which is designed to choke outlet of oil from the top chamber 67.

In use, during lifting of the reservoir 3 there are identified any possible hydraulic jacks 14 that are less loaded, which, on account of the lower load, expand more than the others (i.e., they expand more rapidly, and hence, in one and the same time interval, they perform a greater expansion). The difference of load between the various hydraulic jacks 14 is due to a lack of symmetry of the ensemble. In other words, on account of minor degrees of lack of symmetry, that are difficult to avoid, the centroid A of thrust of the hydraulic jacks 14 may not coincide with the centroid B of the weight of the reservoir 3 and, on account of said difference, some hydraulic jacks 14 are less loaded than other hydraulic jacks 14. Consequently, given the same hydraulic thrust, the less loaded hydraulic jacks 14 expand more rapidly and hence determine a progressive inclination of the reservoir 3 with respect to the vertical.

In order to identify any possible hydraulic jacks 14 that are less loaded, it is possible to monitor (i.e., detect) the expansion of all the hydraulic jacks 14 so as to determine any possible hydraulic jacks 14 that expand more than the others or else it is possible to interpret the signals supplied by the inclination sensor 63 (i.e., by analysing the inclination of the reservoir 3, it is possible to determine the position of the less loaded hydraulic jacks 14, which expand more than the others).

Once the hydraulic jacks 14 that are less loaded (i.e., subjected to a lower load) are identified, the load on the less loaded hydraulic jacks 14 is hydraulically increased in order to balance the loads of all the hydraulic jacks 14. In order to increase hydraulically the load of one hydraulic jack 14, the outlet of the oil from the top chamber 67 which is emptied of oil during the displacement upwards of the mobile rod 16 is choked. Said choking is performed by closing the proportional valve 71 set in a position corresponding to the opening 70 for inlet/outlet of the oil of the top chamber 67. In other words, in order to compensate for the differences in load on the various hydraulic jacks 14, to the force of gravity acting on the hydraulic jacks 14 there added is, where necessary, a further load of hydraulic origin (i.e., a fictitious balancing load) obtained by choking the proportional valves 71 so that the sum of the force of gravity and of the load of hydraulic origin is the same for all the hydraulic jacks 14. In this way, by balancing the overall load on all the hydraulic jacks 14, lifting of the reservoir 3 can proceed along a perfectly vertical path.

## Claims

1. A method for construction of a water tower (1) made of reinforced concrete comprising a bed (2), an elevated reservoir (3), and a stem (5) for supporting the reservoir (3) above the bed (2); the method comprising the steps of:
providing the bed (2) on the ground;
completing the reservoir (3) above the bed (2) and on top of a formwork (9) for forming of the stem (5), which comprises a dismantleable annular reinforcement (8) having an internal section identical to that of the stem (5) to be formed and of a smaller height than that of the stem (5) itself, connection means (21, 22) extending between the reinforcement (8) and the reservoir (3) so as to render the reinforcement (8) and the reservoir (3) fixed with respect to one another, and a plurality of hydraulic jacks (14) distributed about the reinforcement (8) and each comprising a top mobile rod (16), a bottom tubular foot (17), and resting means (18) coupled to the tubular foot (17);
making a first casting of a first segment (28) of the stem (5) that is defined by the reinforcement (8) kept in contact with the bed (2) and englobes the tubular feet (17) of the hydraulic jacks (14);
displacing the mobile rods (16) of the hydraulic jacks (14) upwards from an initially retracted position to an extracted position, thus determining lifting of the reservoir (3) and of the reinforcement (8) for a given stretch;
carrying out, for at least one hydraulic jack (14), and in succession for all the other hydraulic jacks (14), the operations of advance consisting in: bringing the corresponding mobile rod (16) into the retracted position,
thus determining lifting of the corresponding hydraulic jack (14) for the given stretch; and setting the hydraulic jack (14) back into action without lifting the reservoir (3);
carrying out a second casting of a second segment (28) of the stem (5) defined by the reinforcement (8) on top of the first segment (28); and
repeating the operations of lifting, advancing, and casting for a number of times necessary for completing the stem (5);
the method is **characterized in that**:
the operations of advance consist also in feeding in sand (30) through the corresponding tubular foot (17) and underneath the resting means (18) of each hydraulic jacks (14) so that when the hydraulic jack (14) is set back into action the jack (14) rests on the sand (30) with the resting means (18) ;
each hydraulic jack (14) is a double-acting hydraulic jack and comprises two chambers (66, 67), which are designed to be filled with pressurized oil, are provided with respective pistons (68) connected to the mobile rod (16), and are alternatively filled and emptied for displacing the mobile rod (16) in two opposite directions;
it comprises the further step of identifying at least one hydraulic jack (14) that is subjected to a load lower than that of the other hydraulic jacks (14) on account of a lack of symmetry of the ensemble; and
it comprises the further step of increasing hydraulically the load of the hydraulic jack (14) that is subjected to a load lower than that of the other hydraulic jacks (14) in order to balance the loads of all the hydraulic jacks (14), by choking the outlet of the oil from the chamber (67) that is emptied of the oil during displacement upwards of the mobile rod (16).

2. The method according to Claim 1, and comprising the further step of identifying a hydraulic jack (14) that is subjected to a load lower than that of the other hydraulic jacks (14), identifying the hydraulic jack (14) that has expanded more than the other hydraulic jacks (14) during lifting of the reservoir (3) and of the reinforcement (8).

3. The method according to Claim 1 and comprising the further step of identifying a hydraulic jack (14) that is subjected to a load lower than that of the others by analysing the inclination of the reservoir (3) supplied by at least one inclination sensor (63).

4. The method according to Claim 1, 2 or 3 and comprising the further step of choking the outlet of the oil from the chamber (67) that is emptied of the oil during displacement upwards of the mobile rod (16) by closing a proportional valve (71) set in a position corresponding to an opening (70) for inlet/outlet of the oil.

5. The method according to any one of Claims 1 to 4 and comprising the further steps of:
dividing the hydraulic jacks (14) into three operating sets, which are equivalent to one another, symmetrical, and independent;
supplying the hydraulic jacks (14) of each operating set by means of a respective proportional solenoid valve (59);
establishing a desired value of the inclination of the reservoir (3) with respect to the vertical;
bringing about lifting of the reservoir (3) by expanding together the hydraulic jacks (14) of all three the operating sets;
determining, during lifting of the reservoir (3), an effective value of the inclination of the reservoir (3) with respect to the vertical; and
driving the proportional solenoid valves (59) of the three operating sets in feedback control to maintain the effective value of the inclination of the reservoir (3) with respect to the vertical equal to the desired value.

6. The method according to any one of Claims 1 to 5 and comprising the further steps of:
dividing the hydraulic jacks (14) into three operating sets, which are equivalent to one another, symmetrical, and independent; and
actuating together hydraulic jacks (14) of just one operating set at a time so that lifting of the reservoir (3) will occur in a static way by actuating together the hydraulic jacks (14) of just one operating set at a time whilst the hydraulic jacks (14) of the other two operating sets are kept in pause conditions.

7. The method according to Claim 5 or 6, wherein the three operating sets are equivalent to one another, i.e., they each comprise one and the same number of hydraulic jacks (14), and are symmetrical with respect to one another, i.e., the centroids (A) of thrust of the three operating sets correspond to the vertices of an equilateral triangle centred on the centroid (B) of the weight of the reservoir (3).

8. The method according to any one of Claims 1 to 7 and comprising the further step of constantly monitoring the reservoir (3) during lifting by means of a control unit (40), which is connected to an inclination sensor (63) that measures in real time the inclination of the reservoir (3) with respect to the vertical.

9. The method according to any one of Claims 1 to 8, wherein:
provided in the bed (2) is a plurality of vertical tubular ducts (10) open at the top; each hydraulic jack (14) is set coaxial to a respective tubular duct (10), is initially mounted with its own tubular foot (17) slidably engaged inside the corresponding tubular duct (10), and rests with its own resting means (18) on a bottom end of the respective tubular duct (10) itself; the resting means (18) comprise, for each hydraulic jack (14), a fixed resting rod (18) directed vertically downwards and through the corresponding tubular foot (17), from which it projects with a bottom end stretch thereof set initially in contact with the bottom end of the corresponding tubular duct (10).

10. The method according to any one of Claims 1 to 8, wherein:
provided in the bed (2) is a plurality of vertical tubular ducts (10) open at the top; each hydraulic jack (14) is set coaxial to a respective tubular duct (10), is initially mounted with its own tubular foot (17) slidably engaged inside the corresponding tubular duct (10), and rests with its own resting means (18) on a bottom end of the respective tubular duct (10) itself; and the resting means (18) comprise, for each hydraulic jack (14), a tubular element (18) provided at the bottom with a closing plate (32), which has at least one through hole (33) for enabling off-flow of the sand (30) downwards.

11. The method according to Claim 10, wherein the closing plate (32) is hourglass-shaped and has a single central through hole (33) in order to favour off-flow of the sand (30) downwards and hinder backflow of the sand (30) upwards.

12. The method according to any one of Claims 1 to 11 and comprising the further step of progressively unwinding, during lifting of the stem (5), the pre-compression cables (24) fixedly connected to the bed (2) off drums (25) carried by the reservoir (3).

13. The method according to any one of Claims 1 to 12, wherein: the reservoir (3) comprises a central pipe (37), which is co-axial to the stem (3), and is formed by the union of a plurality of tubular segments (45) stacked on top of one another; the segments (45) that constitute the central pipe (37) are packed together by means of a plurality of pre-compression tie bars (47), which extend from a plane bottom wall (34) of the reservoir (3) to a plate (47) for top closing of the central pipe (37).

14. The method according to Claim 13, wherein each tie bar (47) is constituted by a metal strand set inside a vertical through hole (48) made through a side wall of the segments (45) that constitute the central pipe (37).

15. The method according to Claim 13 or 14, wherein the central pipe (37) has an external annular flange (43) that supports centrally a covering (39) of the reservoir (3).

## Patentansprüche

1. Verfahren zur Errichtung eines Wasserturmes (1), der aus Stahlbeton hergestellt ist, aufweisend ein Bett (2), einen Hochbehälter (3) und einen Schaft (5) zum Abstützen des Behälters (3) über dem Bett (2); wobei das Verfahren die Schritte aufweist:
Bereitstellen des Bettes (2) auf dem Boden;
Fertigstellen des Behälters (3) über dem Bett (2) und am oberen Ende einer Schalung (9) zum Formen des Schaftes (5), welche eine ausschalbare ringförmige Bewehrung (8) mit einem inneren Querschnitt, der identisch mit dem des zu formenden Schaftes (5) ist, und einer kleineren Höhe als die des Schaftes (5) selbst, Verbindungsmittel (21, 22), die sich zwischen der Bewehrung (8) und dem Behälter (3) derart erstrecken, dass sie die Bewehrung (8) und den Behälter (3) in Bezug zueinander festlegen, und eine Mehrzahl von Hydraulikhebern (14) aufweist, die um die Bewehrung (8) herum verteilt sind und jeweils eine obere bewegliche Stange (16), einen unteren rohrförmigen Fuß (17) und Abstützmittel (18) aufweisen, die mit dem rohrförmigen Fuß (17) gekuppelt sind;
Durchführen eines ersten Gießens eines ersten Segments (28) des Schaftes (5), das von der mit dem Bett (2) in Kontakt gehaltenen Bewehrung (8) begrenzt wird und die rohrförmigen Füße (17) der Hydraulikheber (14) umgibt;
Verschieben der beweglichen Stangen (16) der Hydraulikheber (14) nach oben von einer anfänglichen Rückzugsposition in eine Auszugsposition, wodurch das Anheben des Behälters (3) und der Bewehrung (8) für eine vorgegebene Strecke bestimmt wird;
Durchführen der Vorgänge des Weiterrückens für wenigstens einen Hydraulikheber (14) und in Folge für alle anderen Hydraulikheber (14), bestehend aus: Bringen der entsprechenden beweglichen Stange (16) in die Rückzugsposition, wodurch das Anheben des entsprechenden Hydraulikhebers (14) für die vorgegebene Strecke bestimmt wird; und Zurücksetzen des Hydraulikhebers (14) in Betrieb ohne Anheben des Behälters (3);
Durchführen eines zweiten Gießens eines zweiten Segments (28) des Schaftes (5), das von der Bewehrung (8) am oberen Ende des ersten Segments (28) begrenzt wird; und
Wiederholen der Vorgänge des Anhebens, Weiterrückens und Gießens für eine Anzahl von Malen, die zum Fertigstellen des Schaftes (5) notwendig sind;
wobei das Verfahren **dadurch gekennzeichnet ist, dass**:
die Vorgänge des Weiterrückens auch aus Einführen von Sand (30) durch den entsprechenden rohrförmigen Fuß (17) hindurch und unter die Abstützmittel (18) der jeweiligen Hydraulikheber (14) bestehen, so dass, wenn der Hydraulikheber (14) in Betrieb zurückgesetzt ist, sich der Heber (14) mit den Abstützmitteln (18) auf dem Sand (30) abstützt;
jeder Hydraulikheber (14) ein doppeltwirkender Hydraulikheber ist und zwei Kammern (66, 67) aufweist, welche zum Befüllen mit Drucköl bestimmt sind, mit jeweiligen mit der beweglichen Stange (16) verbundenen Kolben (68) versehen sind, und zum Verschieben der beweglichen Stange (16) in zwei entgegengesetzte Richtungen wahlweise befüllt und geleert werden;
dieses den weiteren Schritt des Bestimmens wenigstens eines Hydraulikhebers (14) aufweist, der wegen eines Fehlens von Symmetrie des Ganzen mit einer geringeren Kraft als die der anderen Hydraulikheber (14) beansprucht wird; und
dieses den weiteren Schritt des hydraulischen Erhöhens der Kraft des Hydraulikhebers (14), der mit einer geringeren Kraft als die des anderen Hydraulikhebers (14) beansprucht wird, um die Kräfte aller Hydraulikheber (14) auszugleichen, durch Drosseln des Auslasses des Öls aus der Kammer (67) aufweist, die während der Verschiebung der beweglichen Stange (16) nach oben von dem Öl geleert wird.

2. Verfahren nach Anspruch 1, aufweisend den weiteren Schritt des Bestimmens eines Hydraulikhebers (14), der mit einer geringeren Kraft als die der anderen Hydraulikheber (14) beansprucht wird, durch Bestimmen des Hydraulikhebers (14), der während des Anhebens des Behälters (3) und der Bewehrung (8) mehr als die anderen Hydraulikheber (14) expandiert ist.

3. Verfahren nach Anspruch 1, aufweisend den weiteren Schritt des Bestimmens eines Hydraulikhebers (14), der mit einer geringeren Kraft als die der anderen beansprucht wird, durch Analysieren der Neigung des Behälters (3), die von wenigstens einem Neigungssensor (63) bereitgestellt wird.

4. Verfahren nach Anspruch 1, 2 oder 3, aufweisend den weiteren Schritt des Drosselns des Auslasses des Öls aus der Kammer (67), die während der Verschiebung der beweglichen Stange (16) von dem Öl geleert wird, durch Schließen eines Proportionalventils (71), das in einer Position eingerichtet ist, die einer Öffnung (70) zum Einlassen/Auslassen des Öls entspricht.

5. Verfahren nach einem der Ansprüche 1 bis 4, aufweisend die weiteren Schritte:
Einteilen der Hydraulikheber (14) in drei Arbeitssätze, welche äquivalent zueinander, symmetrisch und unabhängig sind;
Bereitstellen der Hydraulikheber (14) jedes Arbeitssatzes mittels eines entsprechenden Proportionalsolenoidventils (59);
Festlegen eines gewünschten Wertes der Neigung des Behälters (3) in Bezug auf die Vertikale;
Zustandebringen des Anhebens des Behälters (3) durch gemeinsames Expandieren der Hydraulikheber (14) aller drei Arbeitssätze;
Bestimmen eines Effektivwertes der Neigung des Behälters (3) in Bezug auf die Vertikale während des Anhebens des Behälters (3); und
Ansteuern des Proportionalsolenoidventils (59) der drei Arbeitssätze in Regelung, um den Effektivwert der Neigung des Behälters (3) in Bezug auf die Vertikale gleich dem gewünschten Wert zu erhalten.

6. Verfahren nach einem der Ansprüche 1 bis 5, aufweisend die weiteren Schritte:
Einteilen der Hydraulikheber (14) in drei Arbeitssätze, welche äquivalent zueinander, symmetrisch und unabhängig sind; und
gemeinsames Betätigen der Hydraulikheber (14) nur eines Arbeitssatzes auf einmal, so dass das Anheben des Behälters (3) in einer statischen Weise erfolgt, durch gemeinsames Betätigen der Hydraulikheber (14) nur eines Arbeitssatzes auf einmal, während die Hydraulikheber (14) der anderen zwei Arbeitssätze in Pausenzuständen gehalten werden.

7. Verfahren nach Anspruch 5 oder 6, wobei die drei Arbeitssätze äquivalent zueinander sind, d.h. sie weisen jeweils ein und dieselbe Anzahl von Hydraulikhebern (14) auf, und symmetrisch in Bezug zueinander sind, d.h. die Druckschwerpunkte (A) der drei Arbeitssätze entsprechen den Scheitelpunkten eines gleichseitigen Dreiecks, das an dem Gewichtsschwerpunkt (B) des Behälters (3) zentriert ist.

8. Verfahren nach einem der Ansprüche 1 bis 7, aufweisend den weiteren Schritt des konstanten Überwachens des Behälters (3) während des Anhebens mittels einer Steuereinrichtung (40), welche mit einem Neigungssensor (63) verbunden ist, der in Echtzeit die Neigung des Behälters (3) in Bezug auf die Vertikale misst.

9. Verfahren nach einem der Ansprüche 1 bis 8, wobei:
in dem Bett (2) eine Mehrzahl von vertikalen rohrförmigen Kanälen (10) vorgesehen ist, die an dem oberen Ende offen sind; jeder Hydraulikheber (14) koaxial zu einem entsprechenden rohrförmigen Kanal (10) ausgerichtet ist, anfangs mit seinem eigenen rohrförmigen Fuß (17), der in den entsprechenden rohrförmigen Kanal (10) gleitend eingreift, montiert ist und sich mit seinen eigenen Abstützmitteln (18) an einem unteren Ende des entsprechenden rohrförmigen Kanals (10) selbst abstützt; und die Abstützmittel (18) für jeden Hydraulikheber (14) eine feststehende Abstützstange (18) aufweisen, die vertikal nach unten und durch den entsprechenden rohrförmigen Fuß (17) hindurch ausgerichtet ist, aus welchem diese mit einem unteren Endabschnitt davon herausragt, der anfangs mit dem unteren Ende des entsprechenden rohrförmigen Kanals (10) in Kontakt steht.

10. Verfahren nach einem der Ansprüche 1 bis 8, wobei:
in dem Bett (2) eine Mehrzahl von vertikalen rohrförmigen Kanälen (10) vorgesehen ist, die an dem oberen Ende offen sind; jeder Hydraulikheber (14) koaxial zu einem entsprechenden rohrförmigen Kanal (10) ausgerichtet ist, anfangs mit seinem eigenen rohrförmigen Fuß (17), der in den entsprechenden rohrförmigen Kanal (10) gleitend eingreift, montiert ist und sich mit seinen eigenen Abstützmitteln (18) an einem unteren Ende des entsprechenden rohrförmigen Kanals (10) selbst abstützt; und die Abstützmittel (18) für jeden Hydraulikheber (14) ein rohrförmiges Element (18) aufweisen, das an dem unteren Ende mit einer Abschlussplatte (32) versehen ist, welche wenigstens eine Durchgangsöffnung (33) zum Ermöglichen des Ausflusses des Sandes (30) nach unten aufweist.

11. Verfahren nach Anspruch 10, wobei die Abschlussplatte (32) sanduhrförmig ist und eine einzige mittige Durchgangsöffnung (33) aufweist, um den Ausfluss des Sandes (30) nach unten zu begünstigen und den Rückfluss des Sandes (30) nach oben zu behindern.

12. Verfahren nach einem der Ansprüche 1 bis 11, aufweisend den weiteren Schritt des fortschreitenden Abwickelns der mit dem Bett (2) fest verbundenen Vorspannungskabel (24) von Trommeln (25), die von dem Behälter (3) getragen werden, während des Anhebens des Schaftes (5).

13. Verfahren nach einem der Ansprüche 1 bis 12, wobei:
der Behälter (3) ein mittiges Rohr (37) aufweist, welches koaxial zu dem Schaft (3) ist und durch die Vereinigung einer Mehrzahl von rohrförmigen Segmenten (45) gebildet wird, die übereinander gestapelt sind; und die Segmente (45), die das mittige Rohr (37) bilden, mittels einer Mehrzahl von Vorspannungszugankern (47) zusammengesetzt sind, welche sich von einer ebenen unteren Wand (34) des Behälters (3) zu einer Platte (47) zum oberseitigen Verschließen des mittigen Rohres (37) erstrecken.

14. Verfahren nach Anspruch 13, wobei jeder Zuganker (47) von einem Metallstrang gebildet wird, der in eine vertikale Durchgangsöffnung (48) eingesetzt ist, die durch eine Seitenwand der Segmente (45) hindurch ausgebildet ist, die das mittige Rohr (37) bilden.

15. Verfahren nach Anspruch 13 oder 14, wobei das mittige Rohr (37) einen äußeren ringförmigen Flansch (43) aufweist, der eine Abdeckung (39) des Behälters (3) mittig abstützt.

## Revendications

1. Procédé pour construire un château d'eau (1) réalisé avec du béton armé comprenant un lit (2), un réservoir en hauteur (3) et une tige (5) pour supporter le réservoir (3) au-dessus du lit (2) ; le procédé comprenant les étapes consistant à :
prévoir le lit (2) sur le sol ;
terminer le réservoir (3) au-dessus du lit (2) et sur la partie supérieure d'un coffrage (9) pour former la tige (5), qui comprend un renforcement annulaire démontable (8) ayant une section interne identique à celle de la tige (5) à former et de plus petite hauteur que celle de la tige (5) elle-même, des moyens de raccordement (21, 22) s'étendant entre le renforcement (8) et le réservoir (3) afin de rendre le renforcement (8) et le réservoir (3) fixes l'un par rapport à l'autre, et une pluralité de vérins hydrauliques (14) répartis autour du renforcement (8) et chacun comprenant une tige mobile supérieure (16), un pied tubulaire inférieur (17) et des moyens de support (18) couplés au pied tubulaire (17) ;
réaliser une première coulée d'un premier segment (28) de la tige (5) qui est définie par le renforcement (8) maintenu en contact avec le lit (2) et englobe les pieds tubulaires (17) des vérins hydrauliques (14) ;
déplacer les tiges mobiles (16) des vérins hydrauliques (14) vers le haut à partir d'une position initialement rétractée jusqu'à une position déployée, déterminant ainsi le soulèvement du réservoir (3) et du renforcement (8) pour un allongement donné ;
réaliser, pour au moins un vérin hydraulique (14), et en succession pour tous les autres vérins hydrauliques (14), les opérations d'avancement consistant à : amener la tige mobile correspondante (16) dans la position rétractée, déterminer ensuite le soulèvement du vérin hydraulique correspondant (14) pour l'allongement donné ; et ramener le vérin hydraulique (14) en action sans lever le réservoir (3) ;
réaliser une deuxième coulée d'un deuxième segment (28) de la tige (5) définie par le renforcement (8) sur la partie supérieure du premier segment (28) ; et
répéter les opérations de soulèvement, avancement et coulée le nombre de fois nécessaire pour terminer la tige (5) ;
le procédé est **caractérisé en ce que** :
les opérations d'avancement consistent également à l'alimentation en sable (30) par le biais du pied tubulaire correspondant (17) et au-dessous des moyens de support (18) de chaque vérin hydraulique (14) de sorte que lorsque le vérin hydraulique (14) est ramené en action, le vérin (14) s'appuie sur le sable (30) avec les moyens de support (18) ;
chaque vérin hydraulique (14) est un vérin hydraulique à double effet et comprend deux chambres (66, 67), qui sont conçues pour être remplies avec de l'huile sous pression, sont prévues avec des pistons (68) respectifs raccordés à la tige mobile (16), et sont remplies et vidées de manière alternée pour déplacer la tige mobile (16) dans deux directions opposées ;
il comprend l'étape supplémentaire consistant à identifier au moins un vérin hydraulique (14) qui est soumis à une charge inférieure à celle des autres vérins hydrauliques (14) en prenant en compte un manque de symétrie de l'ensemble ; et
il comprend en outre l'étape consistant à augmenter hydrauliquement la charge du vérin hydraulique (14) qui est soumis à une charge inférieure à celle des autres vérins hydrauliques (14) afin d'équilibrer les charges de tous les vérins hydrauliques (14), en empêchant la sortie de l'huile de la chambre (67) qui est dépourvue d'huile pendant le déplacement vers le haut de la tige mobile (16).

2. Procédé selon la revendication 1, et comprenant l'étape supplémentaire consistant à identifier un vérin hydraulique (14) qui est soumis à une charge inférieure à celle des autres vérins hydrauliques (14), à identifier le vérin hydraulique (14) qui s'est expansé davantage que les autres vérins hydrauliques (14) pendant le soulèvement du réservoir (3) et du renforcement (8).

3. Procédé selon la revendication 1, et comprenant l'étape supplémentaire consistant à identifier un vérin hydraulique (14) qui est soumis à une charge inférieure à celle des autres, en analysant l'inclinaison du réservoir (3) transmise par au moins un capteur d'inclinaison (63).

4. Procédé selon la revendication 1, 2 ou 3 et comprenant l'étape supplémentaire consistant à boucher la sortie de l'huile de la chambre (67) qui est dépourvue d'huile pendant le déplacement vers le haut de la tige mobile (16) en fermant une vanne proportionnelle (71) placée dans une position correspondant à une ouverture (70) pour l'entrée/sortie de l'huile.

5. Procédé selon l'une quelconque des revendications 1 à 4 et comprenant les étapes supplémentaires consistant à :
diviser les vérins hydrauliques (14) en trois groupes opérationnels, qui sont équivalents entre eux, symétriques et indépendants ;
alimenter les vérins hydrauliques (14) de chaque groupe opérationnel au moyen d'une électrovanne proportionnelle (59) respective ;
établir une valeur souhaitée de l'inclinaison du réservoir (3) par rapport à la verticale ;
provoquer le soulèvement du réservoir (3) en expansant ensemble les vérins hydrauliques (14) des trois groupes opérationnels ;
déterminer, pendant le soulèvement du réservoir (3), une valeur effective de l'inclinaison du réservoir (3) par rapport à la verticale ; et
entraîner les électrovannes proportionnelles (59) des trois groupes opérationnels en rétroaction, pour maintenir la valeur effective de l'inclinaison du réservoir (3) par rapport à la verticale, égale à la valeur souhaitée.

6. Procédé selon l'une quelconque des revendications 1 à 5, et comprenant les étapes supplémentaires consistant à :
diviser les vérins hydrauliques (14) en trois groupes opérationnels, qui sont équivalents entre eux, symétriques et indépendants ; et
actionner ensemble les vérins hydrauliques (14) d'un seul groupe opérationnel à la fois de sorte que le soulèvement du réservoir (3) se produit d'une manière statique en actionnant ensemble les vérins hydrauliques (14) d'un seul groupe opérationnel à la fois alors que les vérins hydrauliques (14) des deux autres groupes opérationnels sont maintenus dans des conditions de pause.

7. Procédé selon la revendication 5 ou 6, dans lequel les trois groupes opérationnels sont équivalents entre eux, c'est-à-dire qu'ils comprennent chacun un ou le même nombre de vérins hydrauliques (14), et sont symétriques les uns par rapport aux autres, c'est-à-dire que les centres de gravité (A) de poussée des trois groupes opérationnels correspondent aux sommets d'un triangle équilatéral centré sur le centre de gravité (B) du poids du réservoir (3).

8. Procédé selon l'une quelconque des revendications 1 à 7 et comprenant l'étape supplémentaire consistant à surveiller de manière constante le réservoir (3) pendant le soulèvement au moyen d'une unité de commande (40) qui est raccordée à un capteur d'inclinaison (63) qui mesure en temps réel l'inclinaison du réservoir (3) par rapport à la verticale.

9. Procédé selon l'une quelconque des revendications 1 à 8, dans lequel : on prévoit, dans le lit (2), une pluralité de conduites tubulaires verticales (10) ouvertes au niveau de la partie supérieure ; chaque vérin hydraulique (14) est placé de manière coaxiale par rapport à une conduite tubulaire (10) respective, est initialement monté avec son propre pied tubulaire (17) mis en prise par coulissement à l'intérieur de la conduite tubulaire (10) correspondante, et s'appuie avec ses propres moyens de support (18) sur une extrémité inférieure de la conduite tubulaire (10) respective ; les moyens de support (18) comprennent, pour chaque vérin hydraulique (14), une tige de support fixe (18) dirigée verticalement vers le bas et passant par le pied tubulaire (17) correspondant, à partir duquel elle fait saillie avec son allongement d'extrémité inférieure placé initialement en contact avec l'extrémité inférieure de la conduite tubulaire (10) correspondante.

10. Procédé selon l'une quelconque des revendications 1 à 8, dans lequel : on prévoit, dans le lit (2), une pluralité de conduites tubulaires verticales (10) ouvertes au niveau de la partie supérieure ; chaque vérin hydraulique (14) est placé de manière coaxiale par rapport à une conduite tubulaire (10) respective, est initialement monté avec son propre pied tubulaire (17) mis en prise par coulissement à l'intérieur de la conduite tubulaire (10) correspondante, et s'appuie avec ses propres moyens de support (18) sur une extrémité inférieure de la conduite tubulaire (10) respective elle-même ; et les moyens de support (18) comprennent, pour chaque vérin hydraulique (14), un élément tubulaire (18) prévu au fond avec une plaque de fermeture (32), qui a au moins un trou de passage (33) pour permettre l'écoulement du sable (30) vers le bas.

11. Procédé selon la revendication 10, dans lequel la plaque de fermeture (32) est en forme de sablier et a un simple trou de passage central (33) afin de favoriser l'écoulement du sable (30) vers le bas et empêcher le refoulement du sable (30) vers le haut.

12. Procédé selon l'une quelconque des revendications 1 à 11 et comprenant l'étape supplémentaire consistant à dérouler progressivement, pendant le soulèvement de la tige (5), les câbles de pré-compression (24) raccordés de manière fixe au lit (2) des tambours (25) supportés par le réservoir (3).

13. Procédé selon l'une quelconque des revendications 1 à 12, dans lequel : le réservoir (3) comprend un tuyau central (37) qui est coaxial par rapport à la tige (3), et est formé par la réunion d'une pluralité de segments tubulaires (45) empilés les uns sur les autres ; les segments (45) qui constituent le tuyau central (37) sont conditionnés ensemble au moyen d'une pluralité de tirants de pré-compression (47) qui s'étendent à partir d'une paroi inférieure plane (34) du réservoir (3) jusqu'à une plaque (47) pour fermer la partie supérieure du tuyau central (37).

14. Procédé selon la revendication 13, dans lequel chaque tirant (47) est constitué par un brin métallique placé à l'intérieur d'un trou de passage vertical (48) réalisé à travers une paroi latérale des segments (45) qui constituent le tuyau central (37).

15. Procédé selon la revendication 13 ou 14, dans lequel le tuyau central (37) a un rebord annulaire externe (43) qui supporte centralement un couvercle (39) du réservoir (3).
